# EUROPEAN PATENT APPLICATION

(11) **EP 4 604 271 A1**
(43) Date of publication of application: **20.08.2025**
(21) Application number: 22962028.1
(22) Date of filing: 12.10.2022
(51) Int. Cl.: H01M 10/6556, H01M 10/613, H01M 10/6567

(54) **COOLING FLOOR MEMBER AND METHOD FOR MANUFACTURING COOLING FLOOR MEMBER**

(71) Applicant: NIPPON STEEL CORPORATION, Chiyoda-ku Tokyo 100-8071 (JP)
(72) Inventor: SAKIYAMA, Tatsuya, Tokyo 100-8071 (JP); YAMAZAKI, Shohei, Tokyo 100-8071 (JP)
(74) Representative: Vossius & Partner Patentanwälte Rechtsanwälte mbB
(86) International application number: PCT/JP2022/037957
(87) International publication number: WO 2024/079808

(57) **Abstract**

A cooling floor member (100) is a cooling floor member (100) for cooling a battery cell, including a metal underfloor material (101), a flat plate-like metal floorboard (102) which is arranged face to the metal underfloor material (101), and which has a surface opposite to the metal underfloor material (101) that comes into contact with the battery cell, a partition member (105) inserted between the metal underfloor material (101) and the flat plate-like metal floorboard (102) without being joined thereto, and a joint (130) in which the outer peripheral edge of the metal underfloor material (101) and the outer peripheral edge of the flat plate-like metal floorboard (102) are directly and continuously joined, wherein a region surrounded by the metal underfloor material (101), the flat plate-like metal floorboard (102), and the partition member (105) is a cooling liquid flow path (104) through which a cooling liquid flows.

## Description

### TECHNICAL FIELD

The present disclosure relates to a cooling floor member and a method for manufacturing a cooling floor member.

### BACKGROUND ART

In recent years, fuel efficiency regulations have become stricter around the world, and electrification has been advancing in the automotive industry. In electric vehicles (EV) and hybrid electric vehicles (HEV), there is an increasing need to install large-capacity batteries that can be charged quickly in order to extend the cruising range. Quick-charging batteries (batteries) cause self-heating depending on usage conditions and the operation temperature range is specified. The upper limit of the operation temperature is specified because the capacity of cells constituting the battery decreases significantly due to changes in internal chemical substances when exposed to high temperatures. Therefore, batteries often have a cooling system in order to prevent the battery temperature from exceeding the upper limit temperature, and many current EVs and HEVs use an air-cooling method. On the other hand, it is necessary to efficiently reduce an increase in battery temperature, and as the capacity increases, the adoption of a water-cooling structure for the cooling system is considered. In addition, in order to extend the cruising range of automobiles, it is necessary to increase the number of battery cells and reduce the weight of the cooling system.

As a water-cooling structure of a cooling system, for example, Patent Document 1 discloses a panel formed by joining two plates which face each other, and each of which has a flow path therein. The two plates have the same shape divided by a plane that passes through the center of the flow path. An object to be cooled is cooled by circulating a refrigerant through the flow path formed inside the panel. The flow path meanders inside the panel.

### Citation List

### Patent Document

Patent Document 1: Japanese Patent No. 6064730

### SUMMARY OF INVENTION

### Technical Problem

In the case of the configuration of Patent Document 1, the creation of the flow path inside the panel is complicated and the manufacturing cost is high. That is, the meandering flow path inside the panel is, for example, formed by performing groove processing on the inner surface of the plate. In addition, since the two plates have the same shape, it is necessary to perform groove processing on each of the two plates. The plate needs to have a sufficient thickness to perform groove processing, and the weight of the panel increases. In addition, all areas in which no flow path is formed are joined by brazing, but if brazing is insufficient, the refrigerant (water) may leak. When the refrigerant leaks, water may accumulate in the battery pack that stores the battery cells and the cooling system, and the battery cells may become submerged in water inside the battery pack. In addition, heat from the battery cell may cause the cooling system to deform and cooling performance may become unstable.

The present disclosure has been made in view of the above circumstances and an object of the present disclosure is to provide a cooling floor member which can restrict refrigerant leakage, is lightweight, and has stable cooling performance and excellent cooling efficiency and a method for manufacturing a cooling floor member.

### Solution to Problem

In order to solve the above problems, the inventors extensively studied a cooling floor member which restricts refrigerant leakage, is lightweight and has excellent cooling efficiency. As a result, the inventors found that it is possible to obtain a cooling floor member which can restrict refrigerant leakage without performing processing such as groove processing and press processing by inserting a partition member (insert) between thin metal plates without joining them to the thin metal plates and flowing a refrigerant through a space formed between the thin metal plates and the partition member, is lightweight, minimizes thermal distortion and surface distortion, and has excellent cooling efficiency, and a method for manufacturing a cooling floor member.

The present disclosure has been made in view of the above findings. The gist of the present disclosure includes the following aspects.
(1) A cooling floor member according to one embodiment of the present disclosure is a cooling floor member for cooling a battery cell, including:
   a metal underfloor material;
   a flat plate-like metal floorboard which is arranged face to the metal underfloor material, and which has a surface opposite to the metal underfloor material that comes into contact with the battery cell;
   a partition member inserted between the metal underfloor material and the flat plate-like metal floorboard without being joined thereto; and
   a joint in which the outer peripheral edge of the metal underfloor material and the outer peripheral edge of the flat plate-like metal floorboard are directly and continuously joined,
   wherein a region surrounded by the metal underfloor material, the flat plate-like metal floorboard, and the partition member is a cooling liquid flow path through which a cooling liquid flows.
   When the cooling floor member having the above configuration has a structure in which the partition member is inserted between the metal underfloor material and the flat plate-like metal floorboard, and their outer peripheral edges are directly and continuously joined, it eliminates the need for processing such as groove processing and press processing, and can restrict refrigerant leakage, and reduce the weight. In addition, when the metal floorboard whose outer surface comes into contact with the battery cell is flat, the battery cell can be brought into close contact with the cooling floor member, and the battery cells can be installed densely without gaps on the upper surface of the cooling floor member, and thus the battery cells can be cooled efficiently.
(2) In the above (1), the following configuration may be used:
   the partition member being a sheet-like solid.
(3) In the above (1) or (2), the following configuration may be used:
   the partition member being a solid resin.
(4) In the above (3), the following configuration may be used:
   the partition member being a viscoelastic resin having a Young's modulus of 0.01 GPa or more and 0.1 GPa or less.
(5) In the above (2), the following configuration may be used:
   The sheet-like solid being the same metal as the metal underfloor material and the flat plate-like metal floorboard.
(6) In the above (1), the following configuration may be used:
   The metal underfloor material and the flat plate-like metal floorboard being made of steel.
(7) A method for manufacturing a cooling floor member according to one embodiment of the present disclosure, including:
   a step of juxtaposing a plurality of liquid resins in a plan view on one surface of a metal underfloor material and a flat plate-like metal floorboard to form a flow path;
   a step of placing the other of the metal underfloor material and the flat plate-like metal floorboard on the liquid resin, and directly and continuously joining the outer peripheral edge of the metal underfloor material and the outer peripheral edge of the flat plate-like metal floorboard; and
   a step of providing a supply pipe for supplying a cooling liquid and a discharge pipe for discharging the cooling liquid to the flow path surrounded by the metal underfloor material and the flat plate-like metal floorboard,
   wherein the metal underfloor material and the flat plate-like metal floorboard are not joined to the liquid resin.
   According to a method for manufacturing a cooling floor member having the above configuration, it eliminates the need for processing such as groove processing and press processing, and can restrict refrigerant leakage, and reduce the weight. In addition, when the metal floorboard whose outer surface comes into contact with the battery cell is flat, the battery cell can be brought into close contact with the cooling floor member, and the battery cells can be installed densely without gaps on the upper surface of the cooling floor member, and thus the battery cells can be cooled efficiently.
(8) A method for manufacturing a cooling floor member according to one embodiment of the present disclosure, including:
   a step of interposing a sheet-like solid including a route part between a metal underfloor material and a flat plate-like metal floorboard, the route part being a recess or a through-hole;
   a step of directly and continuously joining the outer peripheral edge of the metal underfloor material and the outer peripheral edge of the flat plate-like metal floorboard; and
   a step of providing a supply pipe for supplying a cooling liquid and a discharge pipe for discharging the cooling liquid to the route part surrounded by the metal underfloor material and the flat plate-like metal floorboard,
   wherein the metal underfloor material and the flat plate-like metal floorboard are not joined to the sheet-like solid.
   According to a method for manufacturing a cooling floor member having the above configuration, it eliminates the need for processing such as groove processing and press processing, and can restrict refrigerant leakage, and reduce the weight. In addition, when the metal floorboard whose outer surface comes into contact with the battery cell is flat, the battery cell can be brought into close contact with the cooling floor member, and the battery cells can be installed densely without gaps on the upper surface of the cooling floor member, and thus the battery cells can be cooled efficiently.
(9) A method for manufacturing a cooling floor member according to one embodiment of the present disclosure, including:
   a step of applying a resin to one surface of a metal underfloor material and a flat plate-like metal floorboard;
   a step of peeling off a part of the coated resin to form a flow path;
   a step of placing the other of the metal underfloor material and the flat plate-like metal floorboard on the resin and directly and continuously joining the outer peripheral edge of the metal underfloor material and the outer peripheral edge of the flat plate-like metal floorboard; and
   a step of providing a supply pipe for supplying a cooling liquid and a discharge pipe for discharging the cooling liquid to the flow path surrounded by the metal underfloor material and the flat plate-like metal floorboard,
   wherein the metal underfloor material and the flat plate-like metal floorboard are not joined to the resin.

According to a method for manufacturing a cooling floor member having the above configuration, it eliminates the need for processing such as groove processing and press processing, and can restrict refrigerant leakage, and reduce the weight. In addition, when the metal floorboard whose outer surface comes into contact with the battery cell is flat, the battery cell can be brought into close contact with the cooling floor member, and the battery cells can be installed densely without gaps on the upper surface of the cooling floor member, and thus the battery cells can be cooled efficiently.

### Advantageous Effects of Invention

According to the present disclosure, it is possible to provide a cooling floor member which can restrict refrigerant leakage, is lightweight, and has stable cooling performance and excellent cooling efficiency.

### BRIEF DESCRIPTION OF DRAWINGS

[FIG. 1] An exploded perspective view showing an example of a schematic configuration of a battery pack to which a cooling floor member according to a first embodiment of the present disclosure is applied.
[FIG. 2A] An exploded perspective view illustrating a schematic configuration of the cooling floor member according to the same embodiment.
[FIG. 2B] (a) A plan view of the cooling floor member according to the same embodiment, (b) a cross-sectional end view taken along the arrow A-A' in (a), and (c) a cross-sectional view taken along the arrow a-a' in (b).
[FIG. 3A] An exploded perspective view illustrating a schematic configuration of a cooling floor member according to a second embodiment of the present disclosure.
[FIG. 3B] (a) A plan view of the cooling floor member according to the same embodiment, (b) a cross-sectional end view taken along the arrow B-B' in (a), and (c) a cross-sectional view taken along the arrow b-b' in (b).
[FIG. 4A] An exploded perspective view illustrating a schematic configuration of a cooling floor member according to a third embodiment of the present disclosure.
[FIG. 4B](a) A plan view of the cooling floor member according to the same embodiment, (b) a cross-sectional end view taken along the arrow C-C' in (a), and (c) a cross-sectional view taken along the arrow c-c' in (b).
[FIG. 5A] A view illustrating an example of a method for joining a metal underfloor material and a flat plate-like metal floorboard in a cooling floor member according to one embodiment of the present disclosure, and a cross-sectional view of the cooling floor member.
[FIG. 5B] A view illustrating an example of a method for joining a metal underfloor material and a flat plate-like metal floorboard in a cooling floor member according to one embodiment of the present disclosure, and a cross-sectional view of the cooling floor member.

### DESCRIPTION OF EMBODIMENTS

Cooling floor members according to embodiments of the present disclosure will be described with reference to the drawings. In the following description, components common to the embodiments are denoted with the same reference numerals, and repeated descriptions thereof may be omitted.

In the following description, in a plan view, the longitudinal direction of the cooling floor member is defined as an X direction, the width direction of the cooling floor member is defined as a Y direction, and the thickness direction of the cooling floor member is defined as a Z direction.

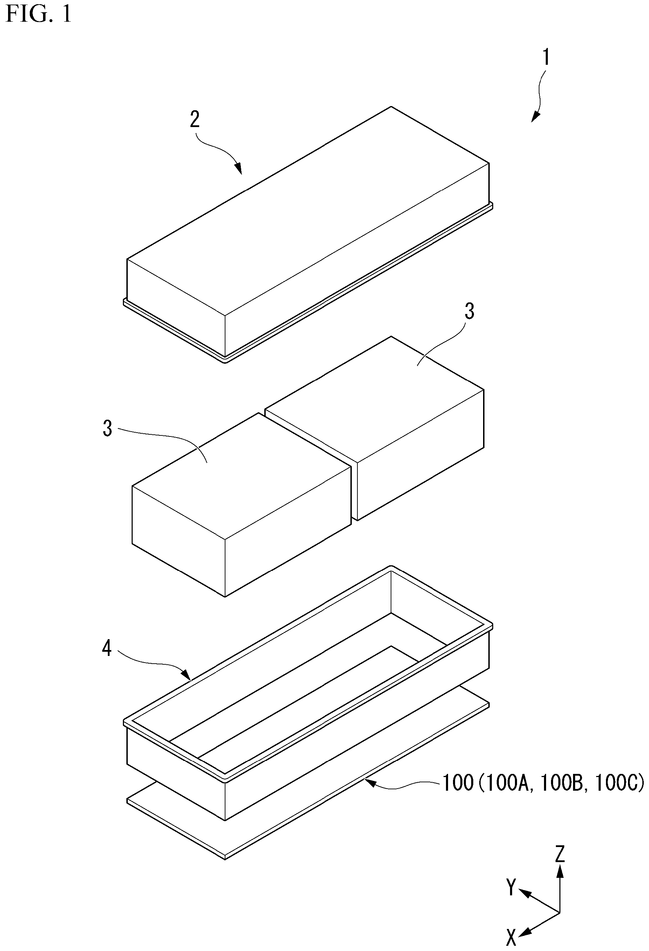

FIG. 1 is an exploded perspective view showing an example of a schematic configuration of a battery pack 1 to which a cooling floor member 100 according to the present embodiment is applied.

As shown in FIG. 1, the battery pack 1 mainly includes an upper cover 2, a battery cell 3, the cooling floor member 100, and a lower cover 4. The upper cover 2 covers the battery cell 3 from above. The battery cell 3 is arranged in close contact with the upper surface of the cooling floor member 100. The lower cover 4 allows storing of the cooling floor member 100 and the battery cell 3 from below.

In FIG. 1, the longitudinal direction (X direction), the width direction (Y direction), and the thickness direction (Z direction) of the cooling floor member 100 are the same as the longitudinal direction, the width direction, and the thickness direction of the battery pack 1, respectively. In FIG. 1, the positive side in the Z direction is the upper side, and the negative side in the Z direction is the lower side.

FIG. 1 shows two battery cells 3 arranged in the X direction, but the number of battery cells 3 in the X direction is not limited to two. For example, three or more battery cells 3 may be arranged in the X direction, or two or more battery cells 3 may be arranged in the Y direction. The number of battery cells 3 may be one.

### [First embodiment]

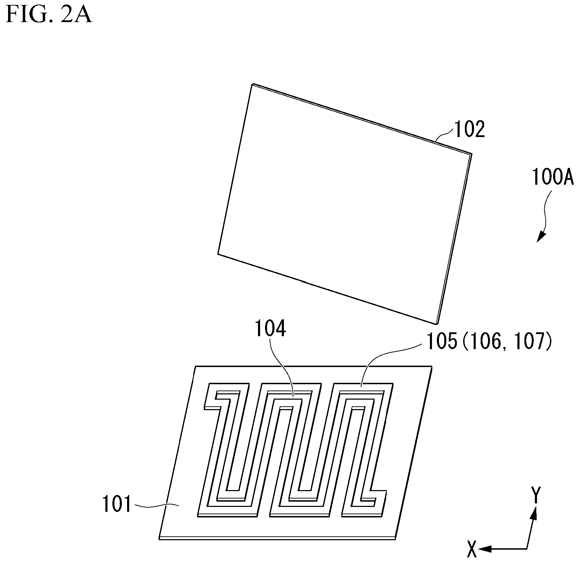

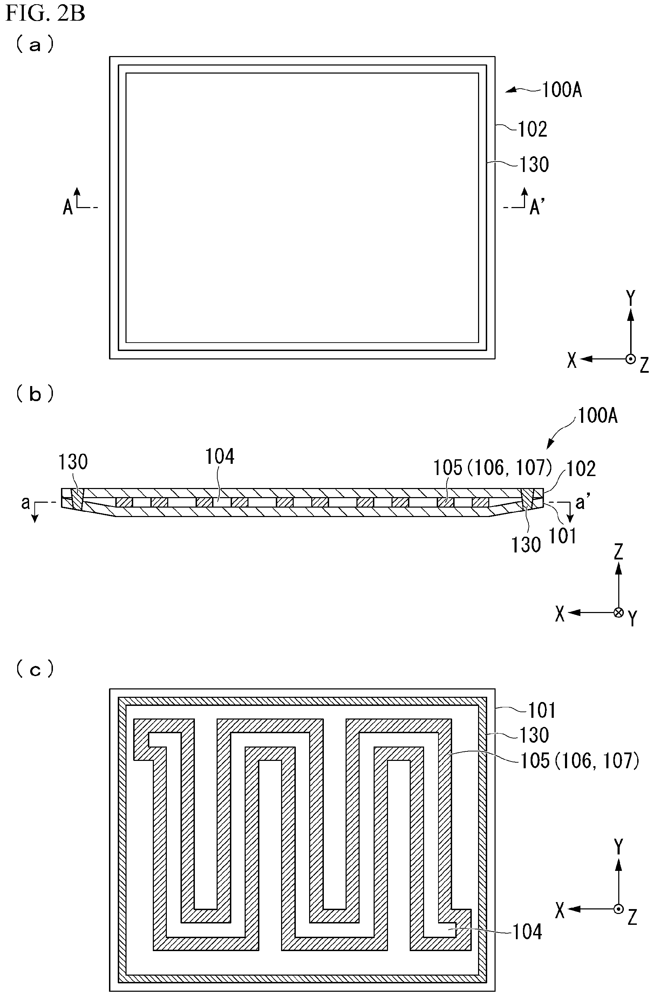

A cooling floor member 100A according to a first embodiment will be described with reference to FIG. 2A and FIG. 2B.

FIG. 2A is an exploded perspective view illustrating a schematic configuration of the cooling floor member 100A according to the same embodiment. FIG. 2B is a view in which a flat plate-like metal floorboard 102 is joined to a metal underfloor material 101 in a cross section taken along the arrow A-A' in FIG. 2A.

The battery cell 3 is placed on the cooling floor member 100A. The cooling floor member 100A includes a metal underfloor material 101, a flat plate-like metal floorboard 102, and a partition member 105. The flat plate-like metal floorboard 102 is arranged face to the metal underfloor material 101, and their outer peripheral edges are directly and continuously joined with the partition member 105 therebetween. Hereinafter, the directly and continuously joined part will be referred to as a joint 130. The region surrounded by the metal underfloor material 101, the flat plate-like metal floorboard 102, and the partition member 105 forms a cooling liquid flow path 104 through which a cooling liquid flows. Within the surface of the flat plate-like metal floorboard 102, the surface opposite to the metal underfloor material 101 comes into contact with the battery cell 3. With such a configuration, the cooling floor member 100A cools the battery cell 3 placed on the flat plate-like metal floorboard 102 with a cooling liquid that flows through the cooling liquid flow path 104.

The metal underfloor material 101 is, for example, an aluminum alloy material or steel. When an aluminum alloy material is used for the metal underfloor material 101, although it is lighter than steel, it is necessary to increase the plate thickness, and thus it is not possible to compactly pack the entire battery pack. In addition, the aluminum alloy material is more expensive than steel. In such a view, the metal underfloor material 101 is preferably steel. The metal underfloor material 101 is more preferably a high-strength steel that has excellent road interfering performance and can be made thin to effectively secure a space. The high-strength steel is steel of 590 MPa grade or higher.

The thickness of the metal underfloor material 101 is preferably 0.5 mm to 3.2 mm. In consideration of weight reduction and strength, the thickness is more preferably 0.8 mm to 1.6 mm.

For the flat plate-like metal floorboard 102, particularly, cooling performance is required. The flat plate-like metal floorboard 102 is made of, for example, an aluminum alloy material or steel. When an aluminum alloy material is used for the flat plate-like metal floorboard 102, although it is lighter than steel, it is necessary to increase the plate thickness, and thus it is not possible to compactly pack the entire battery pack. In addition, an aluminum alloy material is more expensive than steel. In such a view, the flat plate-like metal floorboard 102 is preferably steel. The flat plate-like metal floorboard 102 is more preferably a high-strength steel that has excellent cooling performance and can be made thin to effectively secure a space.

The thickness of the flat plate-like metal floorboard 102 is preferably thin, but since the floorboard is susceptible to damage due to contact with parts caused by vibration or the like, the thickness is preferably 0.2 mm to 2.6 mm. In consideration of the cooling performance, weight reduction and strength, the thickness of the flat plate-like metal floorboard 102 is preferably 0.4 mm to 1.0 mm.

The outer surface of the flat plate-like metal floorboard 102 is flat, that is, has no irregularities. When the outer surface of the flat plate-like metal floorboard 102 that comes into contact with the battery cell 3 is flat, the battery cell 3 and the cooling floor member 100A can be brought into close contact with each other over their entire surfaces. In addition, when the outer surface of the flat plate-like metal floorboard 102 is flat, there is no restriction on the arrangement of the battery cells 3. That is, the battery cells 3 can be installed densely without gaps on the upper surface of the cooling floor member 100A. When the outer surface of the flat plate-like metal floorboard 102 is flat, it is possible to efficiently cool the battery cells 3. In addition, since a flat plate can be used without the need for special shape processing, it is possible to reduce processing costs.

In consideration of corrosion resistance, the metal underfloor material 101 and the flat plate-like metal floorboard 102 are preferably made of the same metal. When the metal underfloor material 101 and the flat plate-like metal floorboard 102 are made of the same metal, it is possible to prevent deterioration due to dissimilar metal contact corrosion that occurs at the connection part between the outer peripheral edge of the metal underfloor material 101 and the outer peripheral edge of the flat plate-like metal floorboard 102 or a decrease in the joining strength due to dissimilar metal melt joining.

The battery cell 3 is placed on the cooling floor member 100A. The battery cell 3 is, for example, a lithium-ion battery. The battery cell 3 has, for example, a rectangular parallelepiped shape. The plurality of battery cells 3 may be arranged in the X direction. The plurality of battery cells 3 may be arranged in the Y direction. The plurality of battery cells 3 may be stacked in the Z direction. Here, the battery cells 3 are placed on the cooling floor member 100A, but this is not limited to a case in which the battery cells 3 are placed directly on the cooling floor member 100A. For example, this also includes a case in which a battery case (not shown) for storing the battery cells 3 that are bundled is placed on the cooling floor member 100A. In this case, it is preferable for the battery case to have a thermal conductivity and thickness at which heat can be conducted from the battery cell 3 to the cooling floor member 100A.

When the metal underfloor material 101 and the flat plate-like metal floorboard 102 are facing each other with the partition member 105 interposed therebetween, the outer peripheral edge of the metal underfloor material 101 and the outer peripheral edge of the flat plate-like metal floorboard 102 are directly and continuously joined. Thereby, the cooling liquid flow path 104 is formed inside the cooling floor member 100A. The partition member 105 is not joined to the metal underfloor material 101 and the flat plate-like metal floorboard 102, but at least a part of the partition member 105 is fixed by being interposed between the metal underfloor material 101 and the flat plate-like metal floorboard 102. In this fixed region, the partition member 105 may either abut or be in contact with the metal underfloor material 101 and the flat plate-like metal floorboard 102 as long as it is not joined to the metal underfloor material 101 and the flat plate-like metal floorboard 102. In addition, in regions other than the fixed region, there may be a gap between the partition member 105 and either the metal underfloor material 101 or the flat plate-like metal floorboard 102. The amount of the gap can be appropriately adjusted as long as at least the cooling liquid flow path 104 is secured. For example, even if there is such a gap before the battery cell 3 is placed, when the battery cell 3 is placed, the flat plate-like metal floorboard 102 may bend, and the partition member 105 may be fixed. The vicinity of the directly and continuously joined joint 130 in the cooling floor member 100A may be a fixed region. The area proportion of the fixed region, that is, the proportion of the contact area between the partition member 105, and the metal underfloor material 101 and the flat plate-like metal floorboard 102 is preferably 5% or more of the entire partition member 105. In addition, the area proportion of the fixed region may be 15% or more, 25% or more, or 40% or more of the entire partition member 105. Here, the entire partition member 105 refers to a total area of the surface on the side of the metal underfloor material 101 in the partition member 105 and the surface on the side of the flat plate-like metal floorboard 102. In addition, the proportion of the contact area between each of the metal underfloor material 101 and the flat plate-like metal floorboard 102 and the partition member 105 is determined, for example, by continuously scanning the entire surface from the side of the flat plate-like metal floorboard 102 using ultrasonic waves, measuring the contact part and the non-contact part, and determining the area of the contact part/the area of the partition member 105 on the side of the flat plate-like metal floorboard.

FIG. 2A shows a state in which the metal underfloor material 101 and the flat plate-like metal floorboard 102 are not joined. FIG. 2B shows a state in which the outer peripheral edge of the metal underfloor material 101 and the outer peripheral edge of the flat plate-like metal floorboard 102 are directly and continuously joined.

The partition member 105 is not joined to the metal underfloor material 101 and the flat plate-like metal floorboard 102. The joining here includes mechanical joining such as rivet joining, screw joining, and press-fitting, metallurgical joining including welding such as fusion welding, pressure welding, and brazing, and resin adhesion and welding.

A refrigerant (cooling liquid) flows through the cooling liquid flow path 104.

When the height of the cooling liquid flow path 104 (the length in the Z direction) is high, a large amount of the refrigerant can flow, and in consideration of weight reduction and cooling efficiency, the height is 1 mm to 10 mm. The height of the cooling liquid flow path 104 is more preferably 1 mm to 5 mm.

In the cooling liquid flow path 104, a supply pipe (not shown) for supplying a refrigerant and a drain pipe (not shown) for draining a refrigerant are provided. The supply pipe and the drain pipe are preferably connected to the cooling liquid flow path 104 via the metal underfloor material 101. These are roughly connected to both ends of the cooling liquid flow path 104 or arranged according to a cooling design in which a supply pipe is roughly positioned in the middle of the cooling liquid flow path 104, and a plurality of drain pipes are provided at both ends of the cooling liquid flow path 104. The refrigerant supplied from the supply pipe flows through the cooling liquid flow path 104 and is drained from the drain pipe, and the refrigerant is cooled by a cooling device (not shown) and then supplied again from the supply pipe to the cooling liquid flow path 104.

A plurality of partition members 105 are juxtaposed to form the cooling liquid flow path 104, and the flow direction of the refrigerant can be controlled to be aligned depending on the length and route of the flow path. When the partition members 105 are appropriately arranged, the battery cells 3 can be efficiently cooled. If there is a gap between the partition member 105 and the metal underfloor material 101 or the flat plate-like metal floorboard 102, the cooling liquid will leak from the cooling liquid flow path 104, but it will not leak outside the cooling floor member 100A because the outer peripheral edge of the cooling floor member 100A is directly and continuously joined to form the joint 130. In addition, even if the cooling liquid leaks from the cooling liquid flow path 104, since the flow of the cooling liquid conforms to the shape of the cooling liquid flow path 104, the cooling performance does not deteriorate significantly. Alternatively, it is possible to actively use the gap between the partition member 105 and the metal underfloor material 101 or the flat plate-like metal floorboard 102 to fill the outside of the cooling liquid flow path 104 with the cooling liquid leaked from the cooling liquid flow path 104, and to cool the battery cell 3 together with the cooling liquid that flows within the cooling liquid flow path 104.

As described above, the cooling floor member 100A has a structure in which the partition member 105 is inserted between the metal underfloor material 101 and the flat plate-like metal floorboard 102, and their outer peripheral edges are directly and continuously joined. This eliminates the need for processing such as groove processing and press processing, and can restrict refrigerant leakage, and reduce the weight. In addition, when the metal floorboard whose outer surface comes into contact with the battery cell 3 is flat, the battery cell 3 can be brought into close contact with the cooling floor member 100A, and the battery cells 3 can be installed densely without gaps on the upper surface of the cooling floor member 100A, and thus the battery cells can be efficiently cooled.

For example, when the flat plate-like metal floorboard 102 and the partition member 105 are joined, a change in temperature of the flat plate-like metal floorboard 102 causes thermal distortion in the flat plate-like metal floorboard 102 due to the difference in linear expansion between the flat plate-like metal floorboard 102 and the partition member 105, and the contact condition with the battery cells 3 installed on the flat plate-like metal floorboard 102 varies, and thus cooling performance may become unstable. Alternatively, when the metal underfloor material 101 and the partition member 105 are joined, residual distortion occurs at the joining interface between the partition member 105 and the metal underfloor material 101 when the partition member 105 is cured, and the surface distortion caused by accumulation of the residual distortion reduces the surface accuracy of a large-area cooling floor member 100A, resulting in a problem of reducing the contact efficiency with the battery cell. In the cooling floor member 100A, since the partition member 105 is not joined to the metal underfloor material 101 and the flat plate-like metal floorboard 102, thermal distortion caused by thermal fluctuation in the partition member 105 and the metal underfloor material 101 or in the partition member 105 and the flat plate-like metal floorboard 102 is prevented. Thereby, the cooling performance is stabilized without changing the adhesion between the cooling floor member 100A and the battery cell 3. The above problems of thermal distortion and surface distortion may occur regardless of the material of the partition member 105, but become significant when the partition member 105 is a resin. Therefore, when the partition member 105 is a solid resin, it is particularly effective for neither the metal underfloor material 101 nor the flat plate-like metal floorboard 102 to be joined to the partition member 105.

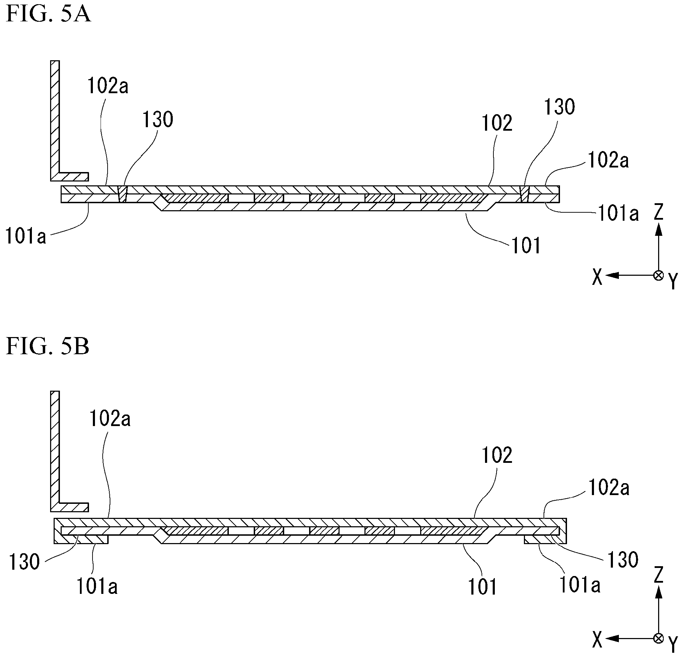

FIG. 5A and FIG. 5B are views illustrating an example of a method for joining the metal underfloor material 101 and the flat plate-like metal floorboard 102 in the cooling floor member 100A according to the present embodiment, and are cross-sectional views of the cooling floor member 100A.

The outer peripheral edge 101a of the metal underfloor material 101 and the outer peripheral edge 102a of the flat plate-like metal floorboard 102 are directly and continuously joined (water-tightly joined) to form the joint 130. Directly and continuously joining is joining in which water is sealed and does not leak even if a water pressure is applied. When the outer peripheral edge 101a of the metal underfloor material 101 and the outer peripheral edge 102a of the flat plate-like metal floorboard 102 are directly and continuously joined, the refrigerant is prevented from leaking from the cooling floor member 100A.

Directly and continuously joining is, for example, continuous melt joining, continuous pressure welding, or continuous seal joining. The outer peripheral edge 101a of the metal underfloor material 101 and the outer peripheral edge 102a of the flat plate-like metal floorboard 102 are continuously joined. Continuous melt joining is, for example, continuous fusion welding by laser welding, resistance seam welding, are welding, plasma welding or the like. Continuous pressure welding is solid-state bonding by magnetic pulse welding, ultrasonic welding, friction stir welding or the like. Continuous seal joining is joining by seaming processing (mechanical joining) such as seaming and seam folding.

Although not shown, the supply pipe and the drain pipe are connected to the cooling liquid flow path 104, for example, via the metal underfloor material 101. Specifically, the supply pipe and the drain pipe are directly and continuously joined to holes provided in the metal underfloor material 101, and the supply pipe and the drain pipe are connected to the cooling liquid flow path 104 through the holes.

FIG. 5A shows a state in which the outer peripheral edge 101a of the metal underfloor material 101 and the outer peripheral edge 102a of the flat plate-like metal floorboard 102 are welded. FIG. 5B shows a state in which the outer peripheral edge 101a of the metal underfloor material 101 and the outer peripheral edge 102a of the flat plate-like metal floorboard 102 are seam-folded. The outer peripheral edge 101a of the metal underfloor material 101 and the outer peripheral edge 102a of the flat plate-like metal floorboard 102 may be caulked.

When the outer peripheral edge 101a of the metal underfloor material 101 and the outer peripheral edge 102a of the flat plate-like metal floorboard 102 are directly and continuously joined to form the joint 130, it is possible to prevent the refrigerant from leaking, and it is possible to prevent the battery cells 3 placed on the cooling floor member 100A from being submerged in water. Even if the refrigerant leaks, since continuous melt joining or continuous seal joining is performed, leakage of the refrigerant can be reduced simply by repairing the outer peripheral edge 101a of the metal underfloor material 101 and the outer peripheral edge 102a of the flat plate-like metal floorboard 102.

In the present embodiment, as shown in FIG. 2A, the partition members 105 are arranged so that the cooling liquid flow path 104 meanders. When the refrigerant flows along the partition members 105 arranged in a meandering manner, the battery cells 3 can be cooled more efficiently. Here, the cooling liquid flow path 104 may have a plurality of routes rather than one route or may have a mesh shape.

As shown in FIGS. 2A and 2B, in the present embodiment, the cooling liquid flow path 104 meanders so that the Y direction is the longitudinal direction, but the meandering direction is not limited thereto. For example, the cooling liquid flow path 104 may meander so that the X direction is the longitudinal direction. In addition, the cooling liquid flow path 104 may not meander.

The partition member 105 may be a solid resin 106 obtained by solidifying a liquid resin. In this case, the cooling liquid flow path 104 is formed by the solid resin 106. The liquid resin is a gel-like resin, and is, for example, a sealant agent.

An example of the manufacturing method in the present embodiment is shown. Here, a plurality of liquid resins are juxtaposed, for example, on one surface of the metal underfloor material 101 and the flat plate-like metal floorboard 102, in a plan view. The juxtaposed liquid resins are solidified to become the partition member 105, and a route having a desired shape is formed. Here, the liquid resin includes a paste resin (also called a gel-like resin).

When the liquid resin is applied in a bead shape using, for example, an application gun held by a robot, any flow path can be created.

When the other of the metal underfloor material 101 and the flat plate-like metal floorboard 102 is placed on the solidified resin, that is, on the partition member 105, and the outer peripheral edges of the metal underfloor material 101 and the flat plate-like metal floorboard 102 are directly and continuously joined, the route between the juxtaposed partition members 105 becomes the cooling liquid flow path 104. In addition, as described above, a supply pipe (not shown) and a discharge pipe (not shown) are provided in the cooling liquid flow path 104. Here, the timing at which the partition member 105 is interposed between the metal underfloor material 101 and the flat plate-like metal floorboard 102 may be either after the resin constituting the partition member 105 is completely solidified or before the resin is completely solidified as long as the metal underfloor material 101 and the flat plate-like metal floorboard 102 are not joined to the partition member 105.

When the solid resin is used, since there are no welding spots between the partition member 105, and the metal underfloor material 101 and the flat plate-like metal floorboard 102, it is possible to prevent the refrigerant from leaking to the outside of the cooling floor member 100A due to weld defects such as pinholes formed in the vicinity of the welded parts.

The partition member 105 may be a viscoelastic resin 107. The viscoelastic resin 107 is, for example, a rubber-like resin. The partition member 105 may be a viscoelastic resin 107 having a Young's modulus of 0.01 GPa or more and 0.1 GPa or less.

When the viscoelastic resin 107 is used for the partition member 105, linear expansion coefficients of the metal underfloor material 101 and the flat plate-like metal floorboard 102 are different from that of the viscoelastic resin 107, but since they are not joined to each other, it is possible to alleviate distortion that occurs at the contact interface when they expand and contract in response to a temperature change. Therefore, it is possible to maintain the stable cooling liquid flow path 104. In addition, there is little out-of-plane deformation of the metal underfloor material 101 and the flat plate-like metal floorboard 102, and it is easy to maintain the flat shapes of the metal underfloor material 101 and the flat plate-like metal floorboard 102.

When the viscoelastic resin 107 is applied in a bead shape using, for example, an application gun held by a robot, any flow path can be created.

Like when the solid resin is used, when the viscoelastic resin 107 is used for the partition member 105, since there are no welding spots between the partition member 105, and the metal underfloor material 101 and the flat plate-like metal floorboard 102, it is possible to prevent the refrigerant from leaking to the outside of the cooling floor member 100A due to weld defects such as pinholes formed in the vicinity of the welded parts.

### [Second embodiment]

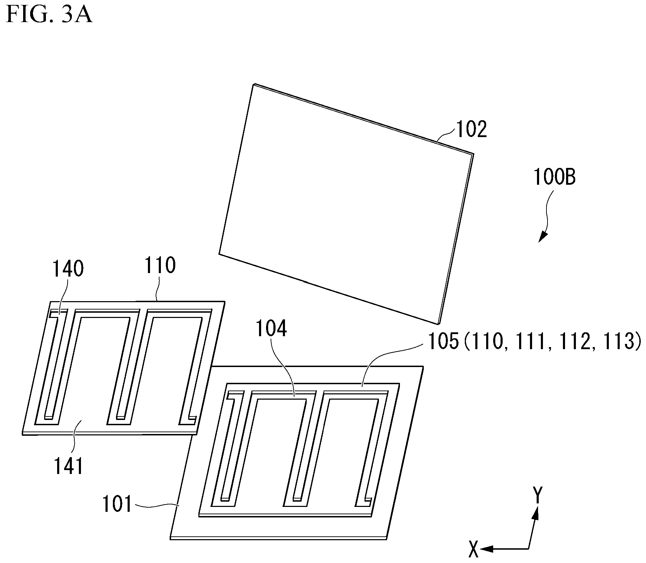

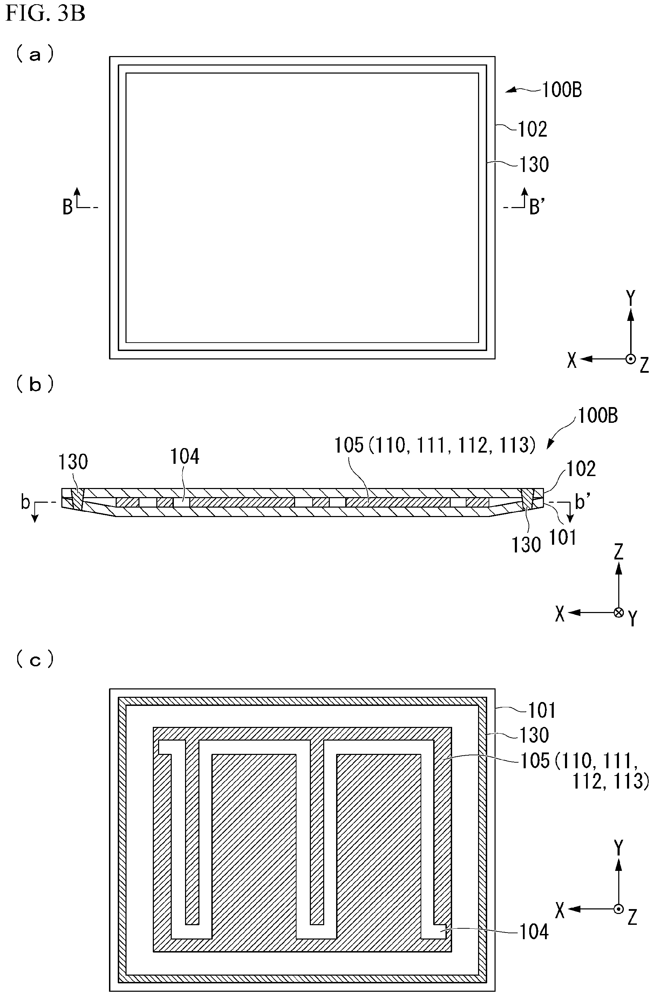

A cooling floor member 100B according to a second embodiment will be described with reference to FIG. 3A and FIG. 3B. In the second embodiment, the same components as those in the first embodiment are denoted with the same reference numerals, descriptions thereof will be omitted and only different points will be described.

The present embodiment differs from the first embodiment in that the partition member 105 is a sheet-like solid 110.

In a plan view, when the distance between the outer peripheral edges of the metal underfloor material 101 and the flat plate-like metal floorboard 102, and the partition member 105 in the X direction or Y direction is small, the partition member 105 makes it difficult to decrease the distance between the metal underfloor material 101 and the flat plate-like metal floorboard 102 in the height direction (thickness direction), and the two may not be directly and continuously joined. When the partition member 105 is a sheet-like solid, since the area of the partition member 105 in the vicinity of the outer peripheral edge is large, the possibility of such poor welding increases. Therefore, in this configuration, in a plan view, a structure in which the shortest distance from the end of the partition member 105 to the joint 130 is 9.5 times or more the thickness of the partition member 105, or a configuration such as embossing processing on the metal underfloor material 101 as shown in FIG. 5A is preferable. Such a configuration is also preferable in the other embodiments.

FIG. 3A is an exploded perspective view illustrating a schematic configuration of the cooling floor member 100B according to the present embodiment. FIG. 3B is a view showing a state in which the flat plate-like metal floorboard 102 is joined to the metal underfloor material 101 in the cross section taken along the arrow B-B' in FIG. 3A. FIG. 3A shows a state in which the metal underfloor material 101 and the flat plate-like metal floorboard 102 are not joined. FIG. 3B shows a state in which the outer peripheral edge of the metal underfloor material 101 and the outer peripheral line of the flat plate-like metal floorboard 102 are directly and continuously joined.

The sheet-like solid 110 is formed, for example, by pressing a flat resin or a flat steel sheet. Thereby, in the sheet-like solid 110, a route part 140 (for example, a recess or a through-hole) serving as the cooling liquid flow path 104 and a flat part 141 (for example, an unprocessed region) around the route part 140 are provided. In the present embodiment, the partition member 105, which is the sheet-like solid 110, is interposed between the metal underfloor material 101 and the flat plate-like metal floorboard 102, and the outer peripheral edges of the metal underfloor material 101 and the flat plate-like metal floorboard 102 are directly and continuously joined. In this case, the metal underfloor material 101 and the flat plate-like metal floorboard 102 are not joined to the sheet-like solid. In addition, as described above, a supply pipe (not shown) and a discharge pipe (not shown) are provided in the route part (the cooling liquid flow path 104).

When the partition member 105 according to the present embodiment has a sheet shape, it is easily created according to a desired shape of the cooling liquid flow path 104, and the degree of freedom in layout design is high. In addition, the shape of the flow path is easily confirmed visually.

In the present embodiment, as shown in FIG. 3A and FIG. 3B, the sheet-like solids 110 are arranged in the Y direction, but the arrangement direction of the sheet-like solids 110 is not limited thereto. For example, the sheet-like solids 110 may be arranged in the X direction. In addition, as in the first embodiment, the sheet-like solids 110 may be arranged so that the cooling liquid flow path 104 meanders.

When the refrigerant flows along the sheet-like solids 110 arranged in this manner, the battery cells 3 can be cooled more efficiently.

The sheet-like solid 110 may be a solid resin 111. The solid resin 111 is, for example, a hard resin, and specifically, for example, an epoxy resin.

When the solid resin 111 is used, since the compression strength is high, it is possible to prevent deformation of the flat plate-like metal floorboard 102 due to the weight of the loaded battery cells 3. Particularly, when the sheet-like solid 110 is used as the partition member 105, since the area of the partition member 105 that faces the flat plate-like metal floorboard 102 is large, the above deformation prevention effect is strong.

When the solid resin 111 is used, since there are no welding spots between the partition member 105, and the metal underfloor material 101 and the flat plate-like metal floorboard 102, it is possible to prevent the refrigerant from leaking to the outside of the cooling floor member 100B due to weld defects such as pinholes formed in the vicinity of the welded parts.

The sheet-like solid 110 may be a viscoelastic resin 112. The viscoelastic resin 112 is, for example, a polyvinyl chloride resin.

When the viscoelastic resin 112 is used, since linear expansion coefficients of the metal underfloor material 101 and the flat plate-like metal floorboard 102 are different from that of the viscoelastic resin 112, it is possible to alleviate distortion that occurs at the contact interface when they expand and contract in response to a temperature change. Therefore, it is possible to maintain the stable cooling liquid flow path 104. In addition, there is little out-of-plane deformation of the metal underfloor material 101 and the flat plate-like metal floorboard 102, and it is easy to maintain the flat shapes of the metal underfloor material 101 and the flat plate-like metal floorboard 102.

Like when the solid resin 111 is used, when the viscoelastic resin 112 is used, since there are no welding spots between the partition member 105, and the metal underfloor material 101 and the flat plate-like metal floorboard 102, it is possible to prevent the refrigerant from leaking to the outside of the cooling floor member 100B due to weld defects such as pinholes formed in the vicinity of the welded parts.

The sheet-like solid 110 may be made of the same type of metal 113 as the metal underfloor material 101 and the flat plate-like metal floorboard 102. Thereby, it is possible to prevent deterioration due to dissimilar metal contact corrosion that occurs at the connection part between the sheet-like solid 110 and the metal underfloor material 101 and the flat plate-like metal floorboard 102 or a decrease in the joining strength due to dissimilar metal melt joining.

### [Third embodiment]

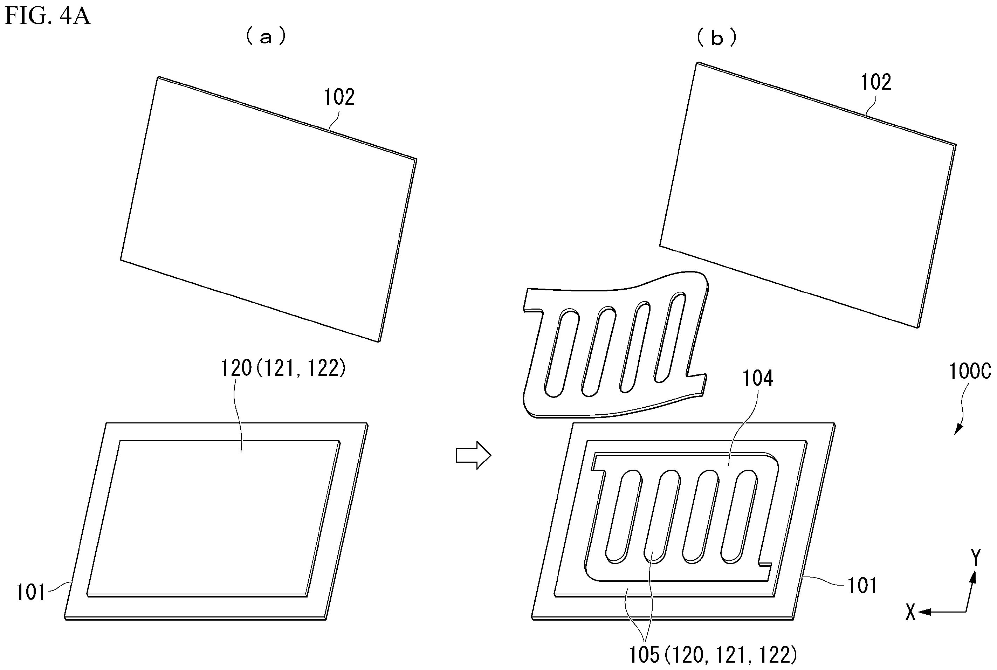

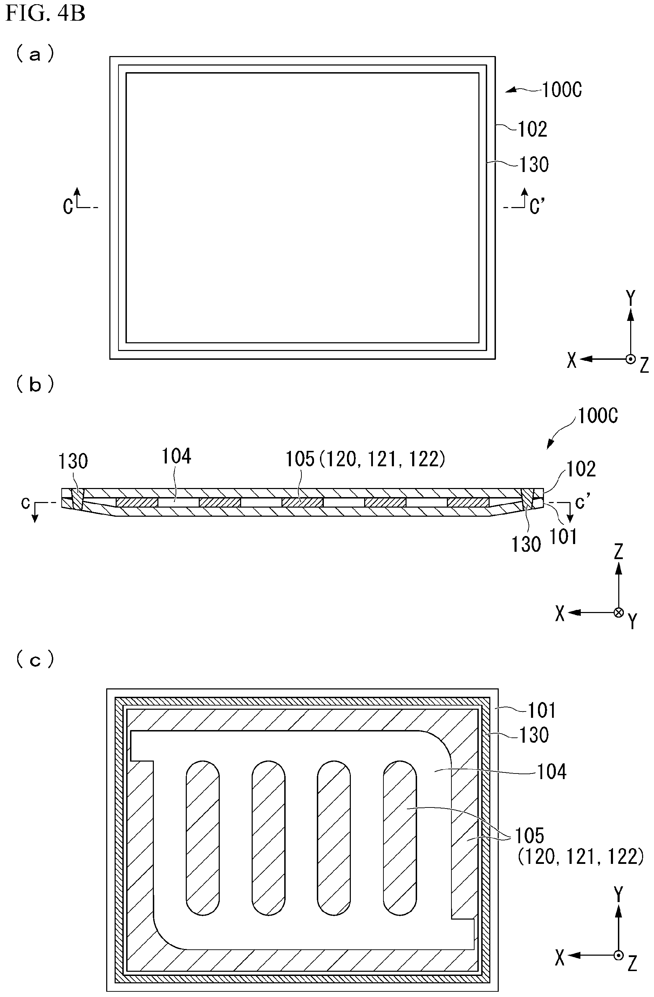

A cooling floor member 100C according to a third embodiment will be described with reference to FIG. 4A and FIG. 4B. In the third embodiment, the same components as those in the first embodiment are denoted with the same reference numerals, descriptions thereof will be omitted and only different points will be described.

The present embodiment differs from the first embodiment in that the partition member is a resin-coated coating resin.

FIG. 4A is an exploded perspective view illustrating a schematic configuration of the cooling floor member according to the present embodiment. FIG. 4B is a view showing a state in which the flat plate-like metal floorboard 102 is joined to the metal underfloor material 101 in the cross section taken along the arrow C-C' in FIG. 4A. FIG. 4A shows a state in which the metal underfloor material 101 and the flat plate-like metal floorboard 102 are not joined. FIG. 4B shows a state in which the outer peripheral edge of the metal underfloor material 101 and the outer peripheral edge of the flat plate-like metal floorboard 102 are directly and continuously joined.

In the present embodiment, when a part of the resin (coating resin 120) applied onto one surface of the metal underfloor material 101 and the flat plate-like metal floorboard 102 is peeled off, the cooling liquid flow path 104 is formed. FIG. 4A(a) shows a state in which the resin is applied to the upper surface of the metal underfloor material 101, and is a state before the coating resin 120 is peeled off. FIG. 4A(b) shows a state in which a part of the coating resin 120 is peeled off.

For example, as shown in FIG. 4A(a), the resin is applied to one surface of the metal underfloor material 101 (the upper surface of the metal underfloor material 101). Next, a part of the coated resin is peeled off to form a flow path, the flat plate-like metal floorboard 102 is placed on the resin, and the outer peripheral edge of the metal underfloor material 101 and the outer peripheral edge of the flat plate-like metal floorboard 102 are directly and continuously joined. Thereby, the resin that remains without being peeled off becomes the partition member 105, and the route after peeling off becomes the cooling liquid flow path 104. In addition, as described above, a supply pipe (not shown) and a discharge pipe (not shown) are provided in the cooling liquid flow path 104. Here, the resin that remains without being peeled off from the metal underfloor material 101, that is, the partition member 105, is separated from the metal underfloor material over time. The separation time may be either before or after the flat plate-like metal floorboard 102 is directly and continuously joined. The joint 130 in which the metal underfloor material 101 and the flat plate-like metal floorboard 102 are directly and continuously joined is not coated with the resin, or even if the resin is applied, it is peeled off before directly and continuously joining. In addition, as described above, a supply pipe (not shown) and a discharge pipe (not shown) are provided in the cooling liquid flow path 104.

For example, the resin is applied to the metal underfloor material 101 in advance. A method of applying the resin to the metal underfloor material 101 is, for example, thermocompression bonding or adhesion. Alternatively, slit coating or dip coating is used for application. In the present embodiment, as described above, the resin applied to the metal underfloor material 101 is joined to the metal underfloor material 101 with a joining strength at which the resin can be separated from the metal underfloor material 101. In order to achieve such a joining strength, for example, it is preferable for an operator to select conditions in which the pressing force and heating temperature are appropriately adjusted during thermocompression bonding. In addition, for example, it is preferable for the operator to select a material in which the adhesive strength is appropriately adjusted as the adhesive used for adhesion.

The thickness of the coating resin is 1 mm to 7 mm. Although it depends on the shape of the water path and the amount of water required, the thickness of the coating resin is preferably 1 mm to 5 mm in consideration of moldability. The thickness of the coating resin is more preferably 3 mm.

The coating resin is peeled off, for example, using a cutter, punch processing, or laser processing.

The coating resin 120 is easily peeled off according to a desired shape of the cooling liquid flow path 104, and the degree of freedom in layout design is high. In addition, the shape of the flow path is easily confirmed visually.

The coating resin 120 that is applied to a metal coil or a metal sheet can be provided. Therefore, it is unlikely to fall off during the step of manufacturing the cooling liquid flow path 104.

In the present embodiment, as shown in FIG. 4A and FIG. 4B, the coating resins 120 are arranged in the Y direction, but the arrangement direction of the coating resins 120 is not limited thereto. For example, the coating resins 120 may be arranged in the X direction. In addition, as in the first embodiment, the coating resin 120 may be peeled off so that the cooling liquid flow path 104 meanders.

When the refrigerant flows along the coating resins 120 arranged in this manner, the battery cells 3 can be cooled more efficiently.

The coating resin may be a solid resin 121. The solid resin 121 is, for example, a hard resin, and specifically, for example, a polyvinyl chloride resin.

When the solid resin 121 is used, since the compression strength is high, it is possible to prevent deformation of the flat plate-like metal floorboard 102 due to the weight of the loaded battery cells 3. Particularly, when the resin-coated area is large, since the area of the partition member 105 that faces the flat plate-like metal floorboard 102 is large, the above deformation prevention effect is strong.

When the solid resin 121 is used, since there are no welding spots between the partition member 105, and the metal underfloor material 101 and the flat plate-like metal floorboard 102, it is possible to prevent the refrigerant from leaking to the outside of the cooling floor member 100A due to weld defects such as pinholes formed in the vicinity of the welded parts.

The coating resin may be a viscoelastic resin 122. The viscoelastic resin 122 is, for example, a polyethylene resin.

When the viscoelastic resin 122 is used, since linear expansion coefficients of the metal underfloor material 101 and the flat plate-like metal floorboard 102 are different from that of the viscoelastic resin 112, it is possible to alleviate distortion that occurs at the contact interface when they expand and contract in response to a temperature change. Therefore, it is possible to maintain the stable cooling liquid flow path 104. In addition, there is little out-of-plane deformation of the metal underfloor material 101 and the flat plate-like metal floorboard 102, and it is easy to maintain the flat shapes of the metal underfloor material 101 and the flat plate-like metal floorboard 102.

Like when the solid resin 121 is used, when the viscoelastic resin 122 is used, since there are no welding spots between the partition member 105, and the metal underfloor material 101 and the flat plate-like metal floorboard 102, it is possible to prevent the refrigerant from leaking to the outside of the cooling floor member 100C due to weld defects such as pinholes formed in the vicinity of the welded parts.

The cooling floor members 100A, 100B, and 100C described in the above embodiments are applied to, for example, electric vehicles and hybrid vehicles.

While the embodiments of the present disclosure have been described above, the embodiments are only examples, and the scope of the present disclosure is not limited only to the embodiments. The embodiments can be implemented in various other forms, and various omissions, substitutions, and modifications can be made without departing from the gist of the disclosure. The embodiments and their modifications are included in the scope and gist of the disclosure, as well as in the scope of the disclosure described in the appended claims and their equivalents.

For example, as shown in FIG. 1, the cooling floor member according to each of the above embodiments is arranged between the lower cover 4 and the battery cell 3, but may be arranged between the battery cells 3 when the plurality of battery cells 3 are stacked in the Z direction.

### INDUS TRIAL APPLICABILITY

According to the present disclosure, it is possible to provide a cooling floor member which can restrict refrigerant leakage, is lightweight, and has stable cooling performance and excellent cooling efficiency and a method for manufacturing a cooling floor member. Therefore, the present disclosure has high industrial applicability.

### REFERENCE SIGNS LIST

1 Battery pack
2 Upper cover
3 Battery cell
4 Lower cover
100, 100A, 100B, 100C Cooling floor member
101 Metal underfloor material
101a, 102a Outer peripheral edge
102 Flat plate-like metal floorboard
104 Cooling liquid flow path
105 Partition member (insert)
106, 111, 121 Solid resin
107, 112, 122 Viscoelastic resin
110 Sheet-like solid
120 Coating resin
130 Joint

## Claims

1. A cooling floor member for cooling a battery cell, comprising:
a metal underfloor material;
a flat plate-like metal floorboard which is arranged face to the metal underfloor material, and which has a surface opposite to the metal underfloor material that comes into contact with the battery cell;
a partition member inserted between the metal underfloor material and the flat plate-like metal floorboard without being joined thereto; and
a joint in which the outer peripheral edge of the metal underfloor material and the outer peripheral edge of the flat plate-like metal floorboard are directly and continuously joined,
wherein a region surrounded by the metal underfloor material, the flat plate-like metal floorboard, and the partition member is a cooling liquid flow path through which a cooling liquid flows.

2. The cooling floor member according to claim 1,
wherein the partition member is a sheet-like solid.

3. The cooling floor member according to claim 1 or 2,
wherein the partition member is a solid resin.

4. The cooling floor member according to claim 3,
wherein the partition member is a viscoelastic resin having a Young's modulus of 0.01 GPa or more and 0.1 GPa or less.

5. The cooling floor member according to claim 2,
wherein the sheet-like solid is the same metal as the metal underfloor material and the flat plate-like metal floorboard.

6. The cooling floor member according to claim 1,
wherein the metal underfloor material and the flat plate-like metal floorboard are made of steel.

7. A method for manufacturing a cooling floor member, comprising:
a step of juxtaposing a plurality of liquid resins in a plan view on one surface of a metal underfloor material and a flat plate-like metal floorboard to form a flow path;
a step of placing the other of the metal underfloor material and the flat plate-like metal floorboard on the liquid resin, and directly and continuously joining the outer peripheral edge of the metal underfloor material and the outer peripheral edge of the flat plate-like metal floorboard; and
a step of providing a supply pipe for supplying a cooling liquid and a discharge pipe for discharging the cooling liquid to the flow path surrounded by the metal underfloor material and the flat plate-like metal floorboard,
wherein the metal underfloor material and the flat plate-like metal floorboard are not joined to the liquid resin.

8. A method for manufacturing a cooling floor member, comprising:
a step of interposing a sheet-like solid including a route part between a metal underfloor material and a flat plate-like metal floorboard, the route part being a recess or a through-hole;
a step of directly and continuously joining the outer peripheral edge of the metal underfloor material and the outer peripheral edge of the flat plate-like metal floorboard; and
a step of providing a supply pipe for supplying a cooling liquid and a discharge pipe for discharging the cooling liquid to the route part surrounded by the metal underfloor material and the flat plate-like metal floorboard,
wherein the metal underfloor material and the flat plate-like metal floorboard are not joined to the sheet-like solid.

9. A method for manufacturing a cooling floor member, comprising:
a step of applying a resin to one surface of a metal underfloor material and a flat plate-like metal floorboard;
a step of peeling off a part of the coated resin to form a flow path;
a step of placing the other of the metal underfloor material and the flat plate-like metal floorboard on the resin and directly and continuously joining the outer peripheral edge of the metal underfloor material and the outer peripheral edge of the flat plate-like metal floorboard; and
a step of providing a supply pipe for supplying a cooling liquid and a discharge pipe for discharging the cooling liquid to the flow path surrounded by the metal underfloor material and the flat plate-like metal floorboard,
wherein the metal underfloor material and the flat plate-like metal floorboard are not joined to the resin.
